# EUROPEAN PATENT SPECIFICATION

(11) **EP 3 157 666 B1**
(45) Date of publication and mention of the grant of the patent: **17.10.2018**
(21) Application number: 15810002.4
(22) Date of filing: 16.06.2015
(51) Int. Cl.: B01J 20/12, B01J 20/10, B01D 15/00, B01J 21/16, C01B 33/24, A23L 5/20, A23G 3/32

(54) **ADSORPTION AND REMOVAL OF 4-METHYLIMIDAZOLE**
ADSORPTION UND ENTFERNUNG VON 4-METHYLIMIDAZOL
ADSORPTION ET ÉLIMINATION DE 4-MÉTHYLIMIDAZOLE

(30) Priority: 18.06.2014 US 201462013795 P
(43) Date of publication of application: 26.04.2017
(73) Proprietor: Imerys Filtration Minerals, Inc., San Jose, CA 95112 (US)
(72) Inventor: LU, Jie, Lompoc, CA 93436 (US)
(74) Representative: Rushton, David John
(86) International application number: PCT/US2015/036023
(87) International publication number: WO 2015/195658

(56) References cited:
- JP-B2- 2 720 044
- US-A- 4 629 712
- US-A1- 2008 305 027
- US-A1- 2011 250 338
- US-B1- 6 462 209
- WILKS R A ET AL: "The isolation of 4-methylimidazole from caramel color and its determination by thin-layer and gas-liquid chromatography", JOURNAL OF CHROMATOGRAPHY A, ELSEVIER, AMSTERDAM, NL, vol. 87, no. 2, 19 December 1973 (1973-12-19), pages 411-418, XP026503713, ISSN: 0021-9673, DOI: 10.1016/S0021-9673(01)91741-8 [retrieved on 1973-12-19]
- ROBERT A. WILKS ET AL: "An improved method for the determination of 4-methylimidazole in caramel color", JOURNAL OF AGRICULTURAL AND FOOD CHEMISTRY, vol. 25, no. 3, May 1977 (1977-05), pages 605-608, XP055437776, ISSN: 0021-8561, DOI: 10.1021/jf60211a058

## Description

### Field of the Disclosure

The present disclosure relates to adsorption and removal of 4-methylimidazole (4-MEI) from solution.

### Background

4-methylimidazole (4-MEI) is a compound formed during the production of certain caramel coloring agents used in many food and drink products. It may also be formed during the cooking, roasting, or other processing of some foods and beverages. Caramel colors may be used to impart brown color of varying shade and intensity to foods and beverages. Caramel colors are often used in cola beverages, although caramel colors may also be used in beer, bakery products, soy sauce, and distilled spirits.

Caramel colors may have different physical characteristics and compositions. For example, caramel colors can be made by reacting any acceptable food grade carbohydrate with ammonium sulfites or by reacting carbohydrates with only ammonia. Some caramel color can be obtained by heating sugar with sodium hydroxide.

Caramel used in beverages may contain 4-MeI on the order of parts per million (ppm) quantities. In 2011, the state of California's Office of Environmental Health Hazard Assessment added 4-MEI to a list of compounds that requires a cancer warning label if the product contains more than 29 µg of 4-MEI. The Food and Drug Administration has also limited the content of 4-MeI in caramel coloring.

As a result of this labeling requirement, it may be desirable to remove 4-MEI from products, such as, for example, beverage products, food products, and caramel coloring.

US 2011/0250338 A1 discloses a process of removing 4-MEI from a caramel color solution with an adsorbent. The adsorbent may be chosen from activated carbon, zeolites, diatomaceous earth, and synthetic polymer resins.

### SUMMARY

In the following description, certain aspects and embodiments will become evident. It should be understood that the aspects and embodiments, in their broadest sense, could be practiced without having one or more features of these aspects and embodiments. It should be understood that these aspects and embodiments are merely exemplary.

According to an aspect of this disclosure, a method for removing 4-methylimidazole (4-MEI) from solution may include contacting an alkaline earth metal silicate with a solution containing 4-MEI and adsorbing at least some of the 4-MEI using the alkaline earth metal silicate. According to another aspect, the method may include removing at least some of the alkaline earth metal silicate having the adsorbed 4-MeI from the solution.

According to another aspect of this disclosure, a method for removing 4-methylimidazole (4-MEI) from solution may include contacting an adsorbent clay material with a solution containing 4-MEI and adsorbing at least some of the 4-MEI using the adsorbent clay material. According to still another aspect, the method may further include removing at least some of the adsorbent clay material having the adsorbed 4-MEI from the solution.

### BRIEF DESCRIPTION OF THE DRAWINGS

FIG. 1 shows exemplary adsorption of 4-MEI from solution at various loading quantities of adsorbent.
FIG. 2 shows exemplary adsorption of 4-MEI from solution at various loading quantities of adsorbents.
FIG. 3 shows exemplary adsorption of 4-MEI from an exemplary soft drink (PEPSI®).
FIG. 4 shows exemplary adsorption of 4-MEI from an exemplary soft drink (PEPSI®).

### DESCRIPTION OF EXEMPLARY EMBODIMENTS

According to some embodiments, a method for removing 4-methylimidazole (4-MEI) from solution may include contacting an alkaline earth metal silicate with a solution containing 4-MEI and adsorbing at least some of the 4-MEI using the alkaline earth metal silicate. According to some embodiments, the method may further include removing at least some of the alkaline earth metal silicate having the adsorbed 4-Mel from the solution.

According to some embodiments, the alkaline earth metal silicate may include the class of synthetic silicates which comprise, in chemical combination, silicon and an alkaline earth metal. The silicon may include silica (SiO₂). The alkaline earth metal may include an alkaline earth metal oxide, such as, for example, magnesium oxide, calcium oxide, or lime. The alkaline earth metal silicate may include, for example, magnesium silicate or calcium silicate. For example, the magnesium silicate may include synthetic magnesium silicate or diatomite-derived magnesium silicate. According to some embodiments, the alkaline earth metal silicate may include a hydrated alkaline earth metal silicate. According to some embodiments, the alkaline earth metal silicate may be in particulate, powder, granule, pellet form, or embedded in filter cloth or other filter media.

According to some embodiments, the alkaline earth metal silicate may be chosen from the group consisting of magnesium silicate or calcium silicate. According to some embodiments, the alkaline earth metal silicate may be a diatomite-derived magnesium silicate.

According to some embodiments, the alkaline earth metal silicate may have a 4-MEI adsorption capacity greater than or equal to about 2000 µg/g based on 25 ml of 50 ppm 4-MEI solution. For example, the alkaline earth metal silicate may have a 4-MEI adsorption capacity greater than or equal to about 3000 µg/g based on 25 ml of 50 ppm 4-MeI solution, greater than or equal to about 3500 µg/g based on 25 ml of 50 ppm 4-MEI solution, or greater than or equal to about 4000 µg/g based on 25 ml of 50 ppm 4-MEI solution.

According to some embodiments, the alkaline earth metal silicate may have a 4-MEI adsorption capacity greater than or equal to about 500 µg/g based on 25 ml of 10 ppm 4-MEI solution. For example, the alkaline earth metal silicate may have a 4-MEI adsorption capacity greater than or equal to about 800 µg/g based on 25 ml of 10 ppm 4-MEI solution, greater than or equal to about 900 µg/g based on 25 ml of 10 ppm 4-MEI solution, greater than or equal to about 1000 µg/g based on 25 ml of 10 ppm 4-MEI solution.

According to some embodiments, the alkaline earth metal silicate may include from about 35 wt% to about 95 wt% of silica (SiO₂), such as, for example, from about 35 wt% to about 80 wt% of silica, from about 35 wt% to about 65 wt% of silica, from about 55 wt% to about 75 wt% of silica, from about 35 wt% to about 50 wt% of silica, from about 50 wt% to about 65 wt% of silica, or from about 65 wt% to about 80 wt% of silica.

According to some embodiments, the alkaline earth metal silicate may include from about 5 wt% to about 45 wt% of magnesium oxide, such as, for example, from about 10 wt% to about 30 wt% of magnesium oxide, from about 10 wt% to about 20 wt% of magnesium oxide, from about 20 wt% to about 25 wt% of magnesium oxide, from about 20 wt% to about 30 wt% of magnesium oxide, from about 15 wt% to about 25 wt% of magnesium oxide, or from about 25 wt% to about 35 wt% of magnesium oxide.

According to some embodiments, the alkaline earth metal silicate may include from about 0.1 to about 1.5 of magnesium oxide to silica molar ratios (MgO:SiO₂). For example, the alkaline earth metal silicate may include from about 0.2 to about 1.0 of magnesium oxide to silica molar ratios (MgO:SiO₂), from about 0.25 to about 0.55 of magnesium oxide to silica molar ratios (MgO:SiO₂), from about 0.30 to about 0.50 of magnesium oxide to silica molar ratios (MgO:SiO₂), from about 0.35 to about 0.45 of magnesium oxide to silica molar ratios (MgO:SiO₂), from about 0.30 to about 0.40 of magnesium oxide to silica molar ratios (MgO:SiO₂), from about 0.40 to about 0.50 of magnesium oxide to silica molar ratios (MgO:SiO₂).

According to some embodiments, the alkaline earth metal silicate may include from about 0.1 wt% to about 60 wt% of calcium oxide, such as, for example, from about 10 wt% to about 60 wt% of calcium oxide, from about 10 wt% to about 20 wt% of calcium oxide, from about 15 wt% to about 30 wt% of calcium oxide, from about 25 wt% to about 60 wt% of calcium oxide, from about 25 wt% to about 50 wt% of calcium oxide, from about 25 wt% to about 40 wt% of calcium oxide, from about 35 wt% to about 60 wt% of calcium oxide, from about 35 wt% to about 50 wt% of calcium oxide, from about 25 wt% to about 60 wt% of calcium oxide, or from about 20 wt% to about 40 wt% of calcium oxide.

According to some embodiments, the alkaline earth metal silicate may include less than or equal to about 5 wt% of alumina, such as, for example, less than about 3 wt% of alumina.

According to some embodiments, the alkaline earth metal silicate may include less than about 2 wt% of iron oxide.

According to some embodiments, the alkaline earth metal silicate may have a particle size ranging from about 0.01 µm to about 150 µm, such as, for example, from about 0.01 µm to about 100 µm, from about 1 µm to about 70 µm, or from about 1 to about 50 µm. According to some embodiments, the alkaline earth metal silicate may have a particle size ranging from about 1 µm to about 50 µm, such as, for example, from about 1 µm to about 30 µm, from about 1 µm to about 10 µm. The particle size of the alkaline earth metal silicate may be determined by a laser diffraction particle size analyzer, such as Microtrac 100X.

According to some embodiments, the alkaline earth metal silicate may form aggregates having an aggregate particle size less than or equal to about 100 µm.

According to some embodiments, the alkaline earth metal silicate may have a BET surface area greater than or equal to about 50 m²/g, such as, for example, greater than or equal to about 75 m²/g, greater than or equal to about 100 m²/g, greater than or equal to about 150 m²/g, greater than or equal to about 200 m²/g, greater than or equal to about 250 m²/g, greater than or equal to about 300 m²/g, greater than or equal to about 350 m²/g, greater than or equal to about 400 m²/g, or greater than or equal to about 500 m²/g. According to some embodiments, the alkaline earth metal silicate may have a BET surface area ranging from about 50 m²/g to about 500 m²/g, such as, for example, ranging from about 50 m²/g to about 150 m²/g, ranging from about 100 m²/g to about 300 m²/g, ranging from about 150 m²/g to about 250 m²/g, or ranging from about 300 m²/g to about 500 m²/g.

According to some embodiments, magnesium silicate has a BET surface area greater than or equal to about 75 m²/g, such as, for example, greater than or equal to about 100 m²/g, greater than or equal to about 150 m²/g, greater than or equal to about 200 m²/g, greater than or equal to about 250 m²/g, greater than or equal to about 300 m²/g, greater than or equal to about 350 m²/g, or greater than or equal to about 400 m²/g.

According to some embodiments, calcium silicate has a BET surface area greater than or equal to about 50 m²/g, such as, for example, greater than or equal to about 75 m²/g, greater than or equal to about 100 m²/g, greater than or equal to about 150 m²/g, greater than or equal to about 200 m²/g, greater than or equal to about 250 m²/g, greater than or equal to about 300 m²/g, greater than or equal to about 350 m²/g, or greater than or equal to about 400 m²/g.

According to some embodiments, a method for removing 4-methylimidazole (4-MEI) from solution may include contacting an adsorbent clay material with a solution containing 4-MEI and adsorbing at least some of the 4-MEI using the adsorbent clay material. The method may further include removing at least some of the adsorbent clay material having the adsorbed 4-MEI from the solution.

According to some embodiments, the adsorbent clay material may include smectite or bentonite.

According to some embodiments, the adsorbent clay material may include an activated adsorbent clay material. According to some embodiments, the adsorbent clay material may be an activated or un-activated American Oil Chemists' Society (AOCS) clay, such as, for example, an un-activated AOCS bleaching clay, an activated AOCS bleaching clay, an un-activated AOCS bleach earth material, or an activated AOCS bleach earth material.

According to some embodiments, the absorbent clay material may have a BET surface area greater than or equal to about 20 m²/g, such as, for example, greater than or equal to about 30 m²/g, greater than or equal to about 50 m²/g, greater than or equal to about 75 m²/g, greater than or equal to about 100 m²/g, greater than or equal to about 150 m²/g, greater than or equal to about 200 m²/g, greater than or equal to about 250 m²/g, or greater than or equal to about 300 m²/g. According to some embodiments, the absorbent clay material may have a BET surface area ranging from about 20 m²/g to about 400 m²/g, such as, for example, ranging from about 30 m²/g to about 300 m²/g, ranging from 50 m²/g to about 250 m²/g, ranging from about 30 m²/g to about 150 m²/g, or ranging from about 150 m²/g to about 300 m²/g.

According to some embodiments, the adsorbent clay material may have a 4-MeI adsorption capacity greater than or equal to about 2000 µg/g based on 25 ml of 50 ppm 4-MEI solution, such as, for example, greater than or equal to about 3000 µg/g based on 25 ml of 50 ppm 4-MEI solution, greater than or equal to about 3500 µg/g based on 25 ml of 50 ppm 4-MEI solution, or greater than or equal to about 4000 µg/g based on 25 ml of 50 ppm 4-MEI solution.

According to some embodiments, the adsorbent clay material may have a 4-MEI adsorption capacity greater than or equal to about 500 µg/g based on 25 ml of 10 ppm 4-MEI solution, such as, for example, greater than or equal to about 800 µg/g based on 25 ml of 10 ppm 4-MEI solution, greater than or equal to about 900 µg/g based on 25 ml of 10 ppm 4-MEI solution, or greater than or equal to about 1000 µg/g based on 25 ml of 10 ppm 4-MEI solution.

According to some embodiments, the alkaline earth metal silicate or the adsorbent clay material may be mixed with the solution containing 4-MEI. The mixing may include, for example, blending, stirring, shaking, and the like, as may be carried out with the aid of any mechanical means, including but not limited to, paddles, propellers, blades, shakers, rollers, and the like.

### EXAMPLE 1

A solution of 10 ppm 4-MEI solution was prepared by dilution with DI water with a stock solution containing 1000 ppm 4-MEI in diluted sulfuric acid solution (0.1N H₂SO₄). 1.0 ml of diazotised sulphanilic acid and 2.0 ml of Na₂CO₃ (5%) solution was added to each of a series of 25 ml volumetric flasks containing 0.0, 1.0, 2.0, 3.0, and 5.0 of working standard solution. The absorbance at 505 nm was measured using a spectrophotometric method and plotted as a standard graph.

Samples A-E were obtained for testing from various sources. Sample A includes a synthetic magnesium silicate, commercially available as CELKATE® T-21 from World Minerals Inc. Sample B includes synthetic, hydrous, amorphous magnesium silicate, commercially available as DALSORB® or Magnesol®-series from the Dallas Group of America, Inc. Sample C includes an activated AOCS bleach earth clay, such as commercially available from BASF. Sample D includes an un-activated AOCS bleaching clay, such as commercially available from BASF. Sample E includes a natural diatomaceous earth material containing a clay material, commercially available as CELITE® S from World Minerals Inc.

Exemplary chemical compositions for samples A, B, D, and E are shown below in Table 1.

**TABLE 1: Exemplary Compositions**

| **Compound** | **Sample A (Celkate® T21)** | **Sample B (Dalsorb® F)** | **Sample D (Un-activated AOCS Bleaching Clay)** | **Sample E (Celite® S)** |
|---|---|---|---|---|
| NA₂O | 0.21 | 1.87 | 1.22 | 0.17 |
| MgO | 21.2 | 19.8 | 2.54 | 0.37 |
| Al₂O₃ | 3.3 | 0.1 | 17.8 | 5.56 |
| SiO₂ | 72.7 | 77.3 | 71.6 | 91.03 |
| P₂O₅ | 0.13 | 0.01 | - | 0.04 |
| K₂O | 0.43 | 0.01 | - | 0.24 |
| CaO | 0.35 | 0.21 | 1.75 | 0.61 |
| MnO | 0.03 | 0 | - | 0.01 |
| TiO₂ | 0.16 | 0.01 | - | 0.21 |
| Fe₂Q₃ | 1.1 | 0.02 | 2.87 | 1.64 |
| Cl | 0.04 | 0.02 | - | 0.01 |
| SO₃ | 0.9 | 0 | - | not detected |
| total | 100.55 | 99.35 | 97.78 | 99.89 |
| CaO:SiO₂ Molar ratio | 0.01 | 0.00 | 0.03 | 0.01 |
| MgO:SiO₂ Molar ratio | 0.43 | 0.38 | 0.05 | 0.01 |

Table 2 shows exemplary BET surface areas for samples A, B, D, and E.

**TABLE 2: Exemplary BET Surface Areas**

| **Sample ID** | **Silica Source** | **BET Surface Area (m²/g)** |
|---|---|---|
| **Sample A (Celkate® T21)** | Lompoc DE | 200.0 |
| **Sample B (Dalsorb® F)** | Synthetic Silica | 463.0 |
| **Sample D (Un-activated AOCS Bleaching Clay)** | Clays | 128.2 |
| **Sample E (Celite® S)** | Mexican DE | 45 |

Samples A-E were added separately to a 50-ml Fisherbrand® polypropylene centrifuge tube in varying loading amounts, as shown in Table 3. 25 ml of the 10 ppm 4-MEI solution was added to the centrifuge, mixed separately with each of Samples A-E at the different loading amounts, and allowed to stand for 30 minutes. The solutions of 4-MEI and Samples A-E were then centrifuged at 2500 rpm for 10 minutes. 1 ml of the supernatant was removed via pipette for measurement. The concentrations of 4-MEI in the solution were calculated both before and after the adsorbent was added to the solution.

The 4-MEI measurements were carried out in aqueous solution using a spectrophotometric method. Color was developed using a sulphanilic acid solution in alkaline medium as described above. The color was measured using a 505 nm wavelength and the amount of 4-methyl imidazole present was calculated from the standard calibration curve.

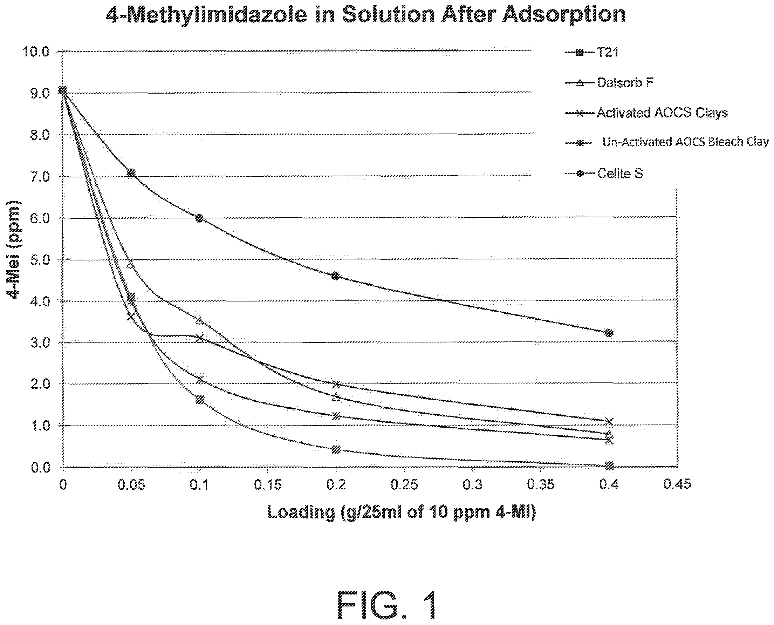

FIG. 1 shows the adsorption of Samples A-E at loading values in grams per 25 ml of 10 ppm 4-MEI solution. Table 3 shows the adsorption of Sample A-E of the 10 ppm 4-MEI in solution.

**TABLE 3: Concentration of 4-MEI in 25 ml 4-MEI or 10 ppm Solution after Adsorption**

| **Loading (g/25ml)** | **Sample A (Celkate® T21)** | **Sample B (Dalsorb® F)** | **Sample C (Activated AOCS Bleach Earth)** | **Sample D (Un-activated AOCS Bleaching Clay)** | **Sample E (Celite® S)** |
|---|---|---|---|---|---|
| 0 | 9.1 | 9.1 | 9.1 | 9.1 | 9.1 |
| 0.05 | 4.1 | 4.9 | 3.6 | 4.0 | 7.1 |
| 0.1 | 1.6 | 3.5 | 3.1 | 2.1 | 6.0 |
| 0.2 | 0.4 | 1.7 | 2.0 | 1.2 | 4.6 |
| 0.4 | 0.0 | 0.8 | 1.1 | 0.6 | 3.2 |
| **Capacity* (µg/g)** | **1085** | **928** | **889** | **984** | **564** |

| | | | | | |
|---|---|---|---|---|---|
| *The adsorption capacity is calculated based on 0.2 g loading. | | | | | |

### EXAMPLE 2

A solution of 50 ppm 4-MEI solution was prepared from a stock solution containing 1000 ppm 4-MEI in diluted sulfuric acid (0.1N H₂SO₄). Samples A-C and E were respectively added to 25 ml of the 50 ppm 4-MEI solution, and the adsorbent properties of the samples were measured, as described in Example 1.

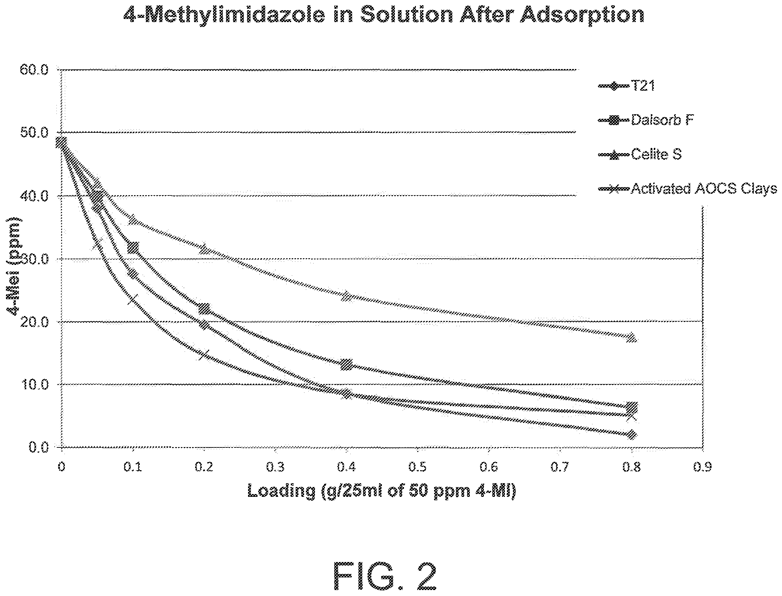

FIG. 2 shows the amount of 4-MEI in solution after adsorption of Samples A-C and E at various loading values in grams per 25 ml of 50 ppm 4-MEI solution. Table 4 shows the adsorption of Sample A-C and E of the 50 ppm 4-MEI in solution.

**TABLE 4: Concentration of 4-MEI in 25 ml of 50 ppm 4-MEI Solution after Adsorption**

| **Loading (g/25ml)** | **Sample A (Celkate® T21)** | **Sample B (Dalsorb® F)** | **Sample C (Activated AOCS Bleach Earth)** | **Sample E (Celite® S)** |
|---|---|---|---|---|
| 0 | 48 | 48 | 48 | 48 |
| 0.05 | 38 | 40 | 32 | 42 |
| 0.1 | 28 | 32 | 24 | 36 |
| 0.2 | 20 | 22 | 15 | 32 |
| 0.4 | 9 | 13 | 8 | 24 |
| 0.8 | 2 | 6 | 5 | 18 |
| **Capacity* (µg/g)** | **3560** | **3241** | **4161** | **2044** |

| | | | | |
|---|---|---|---|---|
| *The adsorption capacity is calculated based on 0.2 g loading | | | | |

As shown in FIGS. 1 and 2 and Tables 3 and 4, Samples A-E have relatively high adsorption values for 4-MEI in solution. Without wishing to be bound to a particular theory, it is believed that the adsorbent materials adsorb 4-MEI through surface bonding effects. For example, the 4-MEI may form surface compounds with surface metals in the adsorbent materials.

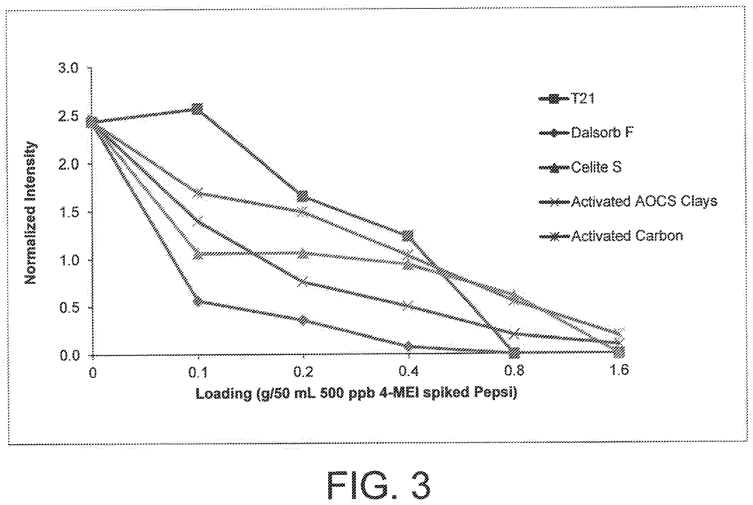

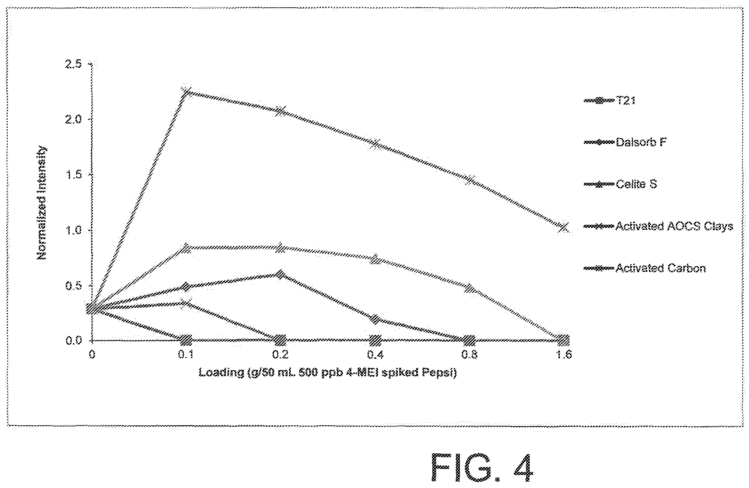

FIGS. 3 and 4 show exemplary adsorptions of 4-MEI from an exemplary soft drink (PEPSI®). In particular, a series of sorbent material was analyzed for its efficacy to remove 4-MEI from PEPSI®. PEPSI® was spiked to a final concentration of 500 ppb, and thereafter, 50 mL of this solution was mixed with 0, 0.1, 0.2, 0.4, 0.8, and 1.6 grams of sorbent, Celkate T21, Celite S, Dalsorb F, activated AOCS, and activated carbon. After agitation for thirty minutes, each of the samples were filtered, and the filtrate was analyzed by LC-MS for 4-MEI. The results are shown in FIG. 3.

In an additional study with the results shown in FIG. 4, Celkate T21 was analyzed for its efficacy as an adsorbent for 4-MEI removal from PEPSI®. A spiked PEPSI® solution containing 221 ppb 4-MEI was agitated with T21 at a loading of 1 g/50 mL PEPSI®. Analysis by LC/MS/MS determined that 4-MEI was below the limit of detection of the instrument (50 ppb), indicating that T21 is a candidate for 4-MEI removal from complex media such as PEPSI®.

Other embodiments of the invention will be apparent to those skilled in the art from consideration of the specification and practice of the exemplary embodiments disclosed herein.

## Claims

1. A method for removing 4-methylimidazole (4-MEI) from solution, the method comprising:
contacting an alkaline earth metal silicate with a solution containing 4-MEI; and
adsorbing at least some of the 4-MEI using the alkaline earth metal silicate,
wherein the alkaline earth metal silicate comprises less than or equal to 5 wt% of alumina.

2. The method of claim 1, further comprising:
removing at least some of the alkaline earth metal silicate having the adsorbed 4-MEI from the solution.

3. The method of claim 1, wherein the alkaline earth metal silicate is chosen from the group consisting of magnesium silicate or calcium silicate.

4. The method of claim 1, wherein the alkaline earth metal silicate is a hydrated alkaline earth metal silicate.

5. The method of claim 1, wherein the alkaline earth metal silicate is a synthetic magnesium silicate.

6. The method of claim 1, wherein the alkaline earth metal silicate is magnesium silicate derived from diatomite.

7. The method of claim 1, wherein the alkaline earth metal silicate comprises from 35 wt% to 95 wt% of silica.

8. The method of claim 1, wherein the alkaline earth metal silicate comprises from 65 wt% to 80 wt% of silica.

9. The method of claim 1, wherein the alkaline earth metal silicate comprises from 5 wt% to 45 wt% of magnesium oxide.

10. The method of claim 1, wherein the alkaline earth metal silicate comprises from 0.1 to 1.5 of magnesium oxide to silica molar ratios (MgO:SiO₂).

11. The method of claim 1, wherein the alkaline earth metal silicate comprises from 0.1 wt% to 60 wt% of calcium oxide.

12. The method of claim 1, wherein the alkaline earth metal silicate comprises less than 2 wt% of iron oxide.

## Patentansprüche

1. Verfahren zum Entfernen von 4-Methylimidazol (4-MEI) aus einer Lösung, wobei das Verfahren umfasst:
ein Erdalkalimetallsilicat mit einer Lösung in Kontakt bringen, die 4-MEI enthält; und
mindestens einen Teil des 4-MEI unter Verwendung des Erdalkalimetallsilicats adsorbieren,
wobei das Erdalkalimetallsilicat weniger als oder gleich 5 Gewichtsprozent Aluminiumoxid umfasst.

2. Verfahren gemäß Anspruch 1 ferner umfassend:
mit dem adsorbierten 4-MEI mindestens einen Teils des Erdalkalimetallsilicats aus der Lösung entfernen.

3. Verfahren gemäß Anspruch 1, wobei es sich bei dem Erdalkalimetallsilicat um Magnesiumsilicat oder Calciumsilicat handelt.

4. Verfahren gemäß Anspruch 1, wobei das Erdalkalimetallsilicat ein hydratisiertes Erdalkalimetallsilicat ist.

5. Verfahren gemäß Anspruch 1, wobei das Erdalkalimetallsilicat ein synthetisches Magnesiumsilicat ist.

6. Verfahren gemäß Anspruch 1, wobei das Erdalkalimetallsilicat ein von Diatomit abgeleitetes Magnesiumsilicat ist.

7. Verfahren gemäß Anspruch 1, wobei das Erdalkalimetallsilicat 35 Gewichtsprozent bis 95 Gewichtsprozent Siliciumdioxid umfasst.

8. Verfahren gemäß Anspruch 1, wobei das Erdalkalimetallsilicat 65 Gewichtsprozent bis 80 Gewichtsprozent Siliciumdioxid umfasst.

9. Verfahren gemäß Anspruch 1, wobei das Erdalkalimetallsilicat 5 Gewichtsprozent bis 45 Gewichtsprozent Magnesiumoxid umfasst.

10. Verfahren gemäß Anspruch 1, wobei das Erdalkalimetallsilicat ein Molverhältnis von Magnesiumoxid zu Siliciumdioxid (MgO:SiO₂) von 0,1 bis 1,5 umfasst.

11. Verfahren gemäß Anspruch 1, wobei das Erdalkalimetallsilicat 0,1 Gewichtsprozent bis 60 Gewichtsprozent Calciumoxid umfasst.

12. Verfahren gemäß Anspruch 1, wobei das Erdalkalimetallsilicat weniger als 2 Gewichtsprozent Eisenoxid umfasst.

## Revendications

1. Un procédé d'élimination du 4-méthylimidazole (4-MEI) d'une solution, le procédé comprenant :
la mise en contact d'un silicate de métal alcalino-terreux avec une solution contenant du 4-MEI ; et
l'adsorption d'au moins une partie du 4-MEI en utilisant le silicate de métal alcalino-terreux,
dans lequel le silicate de métal alcalino-terreux comprend un taux inférieur ou égal à 5 % en poids d'alumine.

2. Le procédé selon la revendication 1, comprenant en outre :
l'élimination d'au moins une partie du silicate de métal alcalino-terreux ayant le 4-MEI adsorbé de la solution.

3. Le procédé selon la revendication 1, dans lequel le silicate de métal alcalino-terreux est choisi dans le groupe constitué par le silicate de magnésium ou le silicate de calcium.

4. Le procédé selon la revendication 1, dans lequel le silicate de métal alcalino-terreux est un silicate de métal alcalino-terreux hydraté.

5. Le procédé selon la revendication 1, dans lequel le silicate de métal alcalino-terreux est un silicate de magnésium synthétique.

6. Le procédé selon la revendication 1, dans lequel le silicate de métal alcalino-terreux est le silicate de magnésium dérivé de la diatomite.

7. Le procédé selon la revendication 1, dans lequel le silicate de métal alcalino-terreux comprend de 35 % à 95 % en poids de silice.

8. Le procédé selon la revendication 1, dans lequel le silicate de métal alcalino-terreux comprend de 65 % à 80 % en poids de silice.

9. Le procédé selon la revendication 1, dans lequel le silicate de métal alcalino-terreux comprend de 5 % à 45 % en poids d'oxyde de magnésium.

10. Le procédé selon la revendication 1, dans lequel le silicate de métal alcalino-terreux comprend un rapport d'oxyde de magnésium à molaire silice allant de 0,1 à 1,5 (MgO : SiO₂).

11. Le procédé selon la revendication 1, dans lequel le silicate de métal alcalino-terreux comprend de 0,1 % à 60 % en poids d'oxyde de calcium.

12. Le procédé selon la revendication 1, dans lequel le silicate de métal alcalino-terreux comprend moins de 2 % en poids d'oxyde de fer.
